# FASCICULE DE BREVET EUROPEEN

(11) **EP 3 234 949 B1**
(45) Date de publication et mention de la délivrance du brevet: **03.10.2018**
(21) Numéro de dépôt: 15817210.6
(22) Date de dépôt: 16.12.2015
(51) Int. Cl.: G21C 15/18, G21D 3/00, G21D 3/06

(54) **PROCÉDÉ DE GESTION DE L'ARRÊT D'UN RÉACTEUR NUCLÉAIRE À EAU PRESSURISÉE**
VERFAHREN ZUR VERWALTUNG EINER UNTERBRECHUNG EINES DRUCKWASSERKERNREAKTORS
METHOD FOR MANAGING STOPPAGE OF A PRESSURISED-WATER NUCLEAR REACTOR

(30) Priorité: 17.12.2014 FR 1402889
(43) Date de publication de la demande: 25.10.2017
(73) Titulaire: NAVAL GROUP, 75015 Paris (FR)
(72) Inventeur: MASDUPUY, Jean, 78230 Le Pecq (FR); PUCCETTI, Fabien, 49000 Angers (FR); HARATYK, Geoffrey, Paul, Etienne, 21000 Dijon (FR); GOURMEL, Vincent, 75014 Paris (FR)
(74) Mandataire: Lavoix
(86) Numéro de dépôt international: PCT/EP2015/080103
(87) Numéro de publication internationale: WO 2016/097061

(56) Documents cités:
- CN-A- 101 719 386
- JP-A- H05 100 075
- US-A- 4 302 291
- US-A- 5 309 487

## Description

La présente invention concerne un procédé de gestion de l'arrêt d'un réacteur nucléaire à eau pressurisée, intégré dans un module immergé de production d'énergie électrique, en cas de détection d'une fuite primaire/secondaire.

De tels modules immergés de production d'énergie électrique sont déjà connus dans l'état de la technique.

On pourra par exemple se reporter aux documents US 5 247 553, JP 50 018 891 et US 4 302 291.

Ces différents documents décrivent effectivement des modules sous-marins ou immergés de production d'énergie électrique dans lesquels peuvent être intégrés des moyens de production d'énergie électrique associés à des moyens formant chaudière nucléaire par exemple.

On sait que de telles structures présentent un certain nombre d'avantages car l'énergie à base nucléaire est une réponse efficace et rentable aux problèmes énergétiques et écologiques.

De telles structures permettent également de résoudre un certain nombre de problèmes notamment en matières de sécurité et de prise en compte des risques qu'ils soient d'origine naturelle comme par exemple les tsunamis, les ouragans ou autres, ou humaine comme par exemple les chutes d'avion ou les actes de malveillance.

On sait également que ces différents projets n'ont pas abouti à des exploitations industrielles pour l'instant.

Des travaux pour l'amélioration de ce type de structures sont menés par la demanderesse depuis très nombreuses années.

Ces travaux se sont déjà traduits par exemple par le dépôt de nombreuses demandes de brevet auxquelles on pourra se référer et notamment les documents FR 2 951 008, FR 2 951 009 et FR 2 951 010, FR 2 951 011, FR 2 951 012 et FR 2 958 782, FR 2 958 783 et FR 2 958 784.

Plusieurs de ces documents traitent en particulier de la sécurité de fonctionnement de ce type de modules et en particulier de leur sécurité en cas d'incident majeur comme cela s'est produit récemment dans des centrales terrestres.

Ces travaux fédérés dans un projet connu sous le nom de FLEXBLUE (marque déposée par la demanderesse) ambitionnent de révolutionner la sûreté nucléaire en proposant un niveau de sûreté inégalé.

La philosophie de cette sûreté est basée sur l'utilisation d'une source froide infiniment disponible et l'utilisation de systèmes de sauvegarde passifs.

Ceux-ci permettent alors au réacteur de faire face de manière autonome au sens de la catégorie D de l'AIEA, c'est-à-dire sans alimentation électrique autre que celle des batteries du système de contrôle/commande ou action d'un opérateur extérieur, à n'importe quel accident pendant une durée de plusieurs semaines contre 72h dans les centrales en construction.

Les systèmes de sauvegarde passifs du projet FLEXBLUE garantissent dans le cadre d'une fuite primaire/secondaire sur un générateur de vapeur, la sauvegarde du réacteur et le respect des critères de sûreté (c'est-à-dire aucun rejet extérieur, non dénoyage du coeur, pas de dégradation de l'enceinte de confinement, etc..).

Toutefois, ceci se fait au prix de dommages industriels importants à savoir par exemple un noyage intégral de l'enceinte de confinement par du fluide primaire contaminé, dommages qu'il conviendrait d'éviter.

La présente demande se propose alors de résoudre deux problèmes techniques à savoir :
- comment détecter une fuite primaire/secondaire sur un réacteur à eau pressurisée et comment identifier le générateur de vapeur en avarie,
- comment annuler cette fuite sans action d'un opérateur ni alimentation électrique extérieure au sein d'un réacteur à eau pressurisée à sûreté passive, sans avoir recours à des systèmes de sauvegarde ultime impliquant la dépressurisation rapide du circuit primaire par ouverture sur l'enceinte de confinement ou tout autre contenant intermédiaire afin de minimiser la contamination des locaux, et sans rejet dans l'environnement.

Le principe à la base de la conception d'un réacteur à eau pressurisée REP est la séparation du fluide primaire au contact du combustible nucléaire et du fluide secondaire qui transmet l'énergie issue de la réaction nucléaire à une turbine hors de l'enceinte de confinement.

Aussi ces deux circuits primaire et secondaire n'ont en commun qu'un nombre limité d'échangeurs à savoir les générateurs de vapeur, au sein desquels l'eau du circuit primaire transmet l'énergie issue de la réaction vers le circuit secondaire en portant son fluide à ébullition.

Pour augmenter les capacités d'évacuation de la puissance du fluide primaire, celui-ci doit être maintenu liquide.

Pour cela ce circuit est soumis à une très forte pression, de l'ordre de 15 MPa, largement supérieure à celle du circuit secondaire, qui est de l'ordre de 7 MPa.

Par conséquent, l'occurrence d'une fuite sur l'un des générateurs de vapeur conduit immanquablement à :
- un déversement de fluide primaire dans le circuit secondaire tant que l'équilibre des pressions entre les circuits n'est pas atteint, et
- un bipasse des barrières de confinement étant entendu que le fluide primaire contaminé se retrouve hors de son circuit (deuxième barrière) et que le circuit secondaire sort de l'enceinte de confinement (troisième barrière), ce qui peut engendrer des rejets importants vers l'environnement.

De telles avaries ne sont pas hypothétiques (probabilité estimée de l'ordre de 10⁻³ par an.réacteur) et il existe un nombre de précédents conséquents sur les réacteurs à eau pressurisée en service dans le monde (cinq avaries majeures sur un parc particulier en service, dont certaines ont engendré des rejets importants de l'ordre de plusieurs dizaines de mètres cubes d'eau contaminée).

Il est à noter que la majorité des réacteurs à eau pressurisée en service actuellement dans le monde présentent des fuites fonctionnelles acceptables entre les circuits primaire et secondaire, à savoir de l'ordre de quelques litres par heure.

Il n'existe pas aujourd'hui de système automatisé de détection des fuites primaire/secondaire qui ne font pas appel à une confirmation du diagnostic par un opérateur.

Le principe générique admis par les exploitants de centrales pour la détection des fuites primaire/secondaire est fondé sur :
- la présence d'une activité due à l'azote 16 dans les lignes vapeur principales du circuit secondaire, largement supérieure à celle due aux seules fuites fonctionnelles (N-16 : un radionucléide particulièrement discriminant et rendant compte de la contamination à court terme du circuit secondaire par le circuit primaire),
- la confirmation de la suspicion de fuite primaire/secondaire par la réalisation par l'opérateur d'un bilan d'eaux primaire et secondaire.

En revanche, en l'absence de ce diagnostic réalisé par un opérateur, le système de contrôle/commande des réacteurs à eau pressurisée en service gère automatiquement cette avarie comme une fuite primaire externe (cas le plus générique) dès lors qu'une masse suffisante de fluide primaire aura été transférée au secondaire.

Une telle gestion de la fuite ne prend pas en compte le bipasse du confinement réalisé par les générateurs de vapeur et conduit à des rejets importants car il est alors fait massivement recours aux capacités de réfrigération utilisant le circuit secondaire, ainsi qu'aux circuits d'injection de sécurité du circuit primaire qui alimentent alors également la fuite.

La sûreté nucléaire réside sur le fait que la conception des réacteurs doit permettre d'assurer en permanence :
- le confinement des matières radioactives,
- l'évacuation de la puissance issue du combustible nucléaire,
- la maîtrise de la réactivité du coeur.

Le respect du troisième critère ci-dessus n'est pas ou est peu impacté par une fuite primaire/secondaire.

En revanche, les deux premiers le sont grandement et le maintien de ces objectifs en présence d'une fuite primaire/secondaire donne souvent lieu à des actions antagonistes.

En effet, l'évacuation de la puissance issue de la réaction nucléaire passe par l'utilisation du circuit secondaire le plus souvent en utilisant des vannes de décharge à l'atmosphère, envoyant directement de la vapeur produite par le générateur contaminé vers l'atmosphère, ce qui génère un rejet important de radionucléide et va à l'encontre du premier critère.

A contrario, l'isolement du générateur de vapeur subissant la fuite primaire/secondaire va conduire à une montée en pression de ce dernier (par manque d'évacuation de puissance par le fluide primaire) ainsi qu'à son remplissage par le fluide primaire contaminé.

Ceci va avoir deux effets majeurs :
- une perte des capacités d'évacuation de la puissance qui va à l'encontre du deuxième critère,
- l'ouverture des soupapes de surpression secondaire conduisant à des rejets plus importants que dans le cas précédent car il s'agira non plus de vapeur contaminée mais d'eau liquide qui est un vecteur d'activité beaucoup plus efficace, ce qui va à l'encontre du premier critère.

La gestion des ruptures de tubes de générateurs de vapeur est donc un exercice délicat.

Elle passe usuellement par une série d'actions de l'opérateur choisissant d'abord de privilégier le premier critère au détriment du second, puis de confiner définitivement les matières radioactives dès que l'évacuation de la puissance produite par le coeur est possible sans avoir recours au circuit secondaire en avarie.

Sur un réacteur à eau pressurisée classique tel que par exemple un EPR, la gestion d'une rupture d'un tube de générateur de vapeur, telle que prévue par la plupart des chaudiéristes, est la suivante :
La détection de l'avarie est réalisée soit par l'opérateur qui présume une rupture de tube de générateur de vapeur soit par le système de contrôle/commande qui détecte une fuite primaire.

Ceci engendre alors dans les deux cas les réactions suivantes :
- l'arrêt automatique du réacteur et l'isolement des générateurs de vapeur du circuit secondaire,
- le déclenchement des systèmes d'injection de sécurité dont l'objectif est de gaver le circuit primaire en eau pour garantir le noyage du coeur malgré la fuite. Dans le cas présent, ceci a aussi pour effet d'entretenir la fuite et de provoquer le remplissage du générateur en avarie,
- le déclenchement des systèmes d'évacuation de la puissance résiduelle par le secondaire. Après l'arrêt, le coeur du réacteur continue de générer de la puissance due à la décroissance radioactive des produits de fission. Pour l'évacuer et éviter l'échauffement puis la fusion du coeur, toutes les vannes de décharge à l'atmosphère de tous les générateurs de vapeur s'ouvrent et rejettent la vapeur à l'atmosphère (dont celle contaminée par la fuite primaire).

Les générateurs de vapeur sont re-remplis en eau liquide par un système dit ASG ce qui dans le cas du générateur de vapeur en avarie contribue à son remplissage en eau liquide.

Une fois que la fuite primaire/secondaire est confirmée et que le générateur de vapeur en avarie est identifié par exemple par l'opérateur, celui-ci est isolé.

Il continue toutefois de se remplir par l'action de l'injection de sécurité qui maintient le circuit primaire en pression.

Le refroidissement du circuit primaire est alors réalisé par les autres générateurs de vapeur.

L'objectif est alors d'arrêter au plus vite l'injection de sécurité afin d'arrêter d'entretenir la fuite et d'éviter le remplissage du générateur en avarie et l'ouverture de ses soupapes de surpression.

Toutefois, ceci n'est possible qu'après que le primaire ait été suffisamment refroidi pour s'assurer que celui-ci ne passera pas en phase vapeur après l'arrêt d'une pompe dit ISMP qui assure sa pressurisation.

Parmi les réacteurs à eau pressurisée connus sur le marché, il en est un pour lequel cette procédure générique a été amendée et adaptée à des systèmes de sauvegarde passifs.

La description de cette stratégie de sauvegarde est en effet donnée dans le document US 5 309 487.

Selon cette stratégie et comme précédemment, l'avarie est détectée et gérée par le système de contrôle/commande comme une fuite primaire.

Il y a alors comme décrit précédemment :
- arrêt automatique du réacteur et isolement des générateurs de vapeur,
- déclenchement des systèmes d'évacuation de la puissance par le secondaire.

Toutes les vannes de décharge à l'atmosphère, dites vannes VDA, de tous les générateurs de vapeur s'ouvrent et rejettent la vapeur à l'atmosphère, dont celle contaminée par la fuite primaire.

Les générateurs de vapeur sont re-remplis en eau liquide par le système ASG.

Toutefois, ce réacteur se distingue par un recours à un système passif d'injection de sécurité.

Au lieu de mettre en oeuvre des pompes de pressurisation ISMP comme sur l'EPR, un réservoir de compensation est raccordé sur le circuit primaire et a pour effet de remplacer, par circulation naturelle, de l'eau chaude issue du circuit primaire, voire de la vapeur, par de l'eau froide.

A cela s'ajoute également un système normal de contrôle volumétrique du circuit primaire qui vient tenter de compenser la fuite en injectant de l'eau dans le circuit primaire.

Ceci a pour effet d'entretenir la fuite et de provoquer le remplissage du générateur de vapeur en avarie.

Pour pallier cet écueil, des automatismes d'arrêt de ce dispositif sont prévus dans le document US mentionné précédemment, si l'un des générateurs de vapeur atteint un niveau très haut en eau.

La conception de ce réacteur est proche de celle proposée dans le projet FLEXBLUE.

Celui-ci résout notamment certains problèmes rencontrés également sur les réacteurs à eau pressurisée classiques dans la gestion de ce type d'avaries et notamment :
- le choix de l'instant de l'arrêt d'injection de sécurité active ISMP,
- le remplissage par les systèmes actifs du générateur de vapeur en avarie.

Toutefois, cette conception n'apporte pas toutes les réponses et notamment pour les raisons suivantes:
- la séquence proposée dans ce document US antérieur n'est automatisée que pendant les premières minutes de l'avarie. Un opérateur doit en effet rapidement intervenir pour identifier le générateur de vapeur en avarie et isoler sa vanne de décharge à l'atmosphère afin de limiter les rejets radioactifs. Ce dernier doit ensuite conduire le refroidissement du circuit primaire par les systèmes passifs.
- la séquence proposée prévoit l'utilisation d'un système ouvert sur l'atmosphère pour évacuer la puissance résiduelle. Ce choix de conception engendre des rejets ce qui est proscrit par le présent projet. Il permet toutefois la mitigation de la fuite par un refroidissement (et donc une dépressurisation) extrêmement rapide du circuit primaire.

L'invention se propose d'apporter des réponses aux questions posées précédemment en tirant partie de l'utilisation de moyens de réfrigération de secours tels que des condenseurs de secours.

En particulier, ceci permet de mettre en oeuvre un système passif d'évacuation de la puissance en circuit fermé par le circuit secondaire, cette solution venant se substituer aux rejets hors de l'enceinte dans le cas d'une fuite primaire/secondaire.

A cet effet, l'invention a pour objet un procédé de gestion de l'arrêt d'un réacteur nucléaire à eau pressurisée, intégré dans un module immergé de production d'énergie électrique, en cas de détection d'une fuite primaire/secondaire d'un générateur de vapeur muni d'une soupape de sécurité, raccordé au réacteur et associé à un moyen de réfrigération de secours, caractérisé en ce qu'il comporte les étapes suivantes :
- 1) détection d'une fuite primaire/secondaire du générateur de vapeur,
- 2) arrêt automatique du réacteur et isolement du générateur de vapeur en avarie,
- 3) lignage du moyen de réfrigération de secours correspondant,
- 4) surveillance de la pression primaire,
- 5) dès que la pression primaire passe sous la pression de tarage des soupapes de sécurité des générateurs de vapeur, isolement du moyen de réfrigération de secours du générateur de vapeur en avarie, et
- 6) poursuite du refroidissement passif du réacteur sur les générateurs et moyens de réfrigération restants.

Suivant d'autres caractéristiques du procédé selon l'invention prises seules ou en combinaison :
- la détection d'une fuite primaire/secondaire se fait par détection d'un ou des phénomènes suivants :
- 1) augmentation de l'activité du circuit secondaire due à la contamination par le fluide primaire,
- 2) augmentation de l'inventaire d'eau secondaire,
- 3) diminution de l'inventaire d'eau primaire ;
- l'isolement du moyen de réfrigération de secours du générateur de vapeur en avarie est obtenu par déclenchement d'une vanne pilotée interposée entre ceux-ci ;
- la vanne pilotée est associée à une réserve d'air comprimé.

L'invention sera mieux comprise à la lecture de la description qui va suivre, donnée uniquement à titre d'exemple et faite en se référant aux dessins annexés sur lesquels :
- la figure 1 représente un organigramme illustrant les différentes étapes d'un procédé selon l'invention,
- la figure 2 illustre un schéma synoptique illustrant une partie d'un réacteur à eau pressurisée, et
- la figure 3 représente un graphique illustrant la mitigation de la fuite primaire/secondaire.

Le problème fondamental de la gestion d'une fuite primaire/secondaire sur un réacteur à eau pressurisée à sûreté passive et automatisée sans rejet atmosphérique, réside dans la détection de l'avarie et l'obtention d'un compromis entre le refroidissement et la mitigation de la fuite.

La solution proposée dans la présente demande consiste donc :
- en une logique de détection de fuite primaire/secondaire utilisant la conjonction de plusieurs signaux fondés respectivement sur une augmentation de l'activité N-16 du circuit secondaire, une incohérence dans la régulation de l'eau alimentaire assurant le maintien du niveau du générateur de vapeur et une incohérence dans la régulation du contrôle volumétrique primaire assurant le maintien de l'inventaire en eau primaire,
- en un automatisme venant arrêter la réfrigération par le générateur de vapeur en avarie.

Une fuite primaire/secondaire est caractérisée par :
- une augmentation de l'activité du circuit secondaire due à la contamination par le fluide primaire,
- une augmentation de l'inventaire d'eau secondaire,
- une diminution de l'inventaire d'eau primaire.

Dans la présente demande, on propose de détecter cette fuite à partir de l'un ou plusieurs de ces phénomènes.

En effet, on pourrait se contenter de la détection de l'azote 16 qui pourrait se suffire à elle-même, mais dans le cas de la présente demande, on choisit par exemple de considérer qu'il a une fuite primaire/secondaire dans le cas de la présence simultanée des trois critères indiqués précédemment et ce afin de garantir l'absence de détection intempestive.

Il convient en effet de rappeler que dans le cas du présent projet FLEXBLUE, une non détection de la fuite ne remet pas en cause la sûreté nucléaire, mais provoque des dégradations importantes de l'outil industriel, problème que se propose de résoudre la présente demande.

Le premier critère ci-dessus à savoir l'augmentation de l'activité du circuit secondaire est détectable par l'utilisation de systèmes de détection d'azote 16, placés sur les lignes de vapeur principales du réacteur.

Ces systèmes de détection comportent des capteurs qui doivent être associés à un seuil de déclenchement variable en fonction de la puissance extraite par le réacteur permettant de discriminer une augmentation d'activité due aux fuites fonctionnelles et consécutives d'une augmentation de puissance du coeur, d'une réelle fuite primaire/secondaire.

Le second critère est détectable par le biais d'une incohérence sur le système de régulation de niveau du générateur de vapeur.

En effet, ce système est fondé sur la conjonction de deux valeurs d'entrée à savoir la puissance extraite par la turbine à laquelle est associé un débit vapeur tabulé et la lecture du niveau du générateur de vapeur.

A partir de ces données, le système de régulation injecte le débit d'eau alimentaire liquide (ARE) nécessaire pour maintenir le niveau du générateur de vapeur constant.

Ainsi, l'augmentation non prévue de l'inventaire en eau secondaire sera détectable par une différence entre le débit d'eau alimentaire attendu pour la puissance fournie et le débit alimentaire effectivement injecté pour maintenir le niveau du générateur de vapeur constant.

Le dernier critère est détectable par le biais d'une incohérence sur le système de régulation volumétrique du circuit primaire.

Si ce dernier doit injecter une forte quantité d'eau pour maintenir le niveau du pressuriseur à pression et température primaires constantes, c'est qu'il y a une perte d'inventaire primaire non identifiée.

L'objectif de l'automatisme proposé est donc de trouver un compromis entre :
- l'assurance d'une évacuation de puissance maximale et d'un refroidissement rapide du primaire en utilisant tous les condenseurs (ou autres moyens de réfrigération) de secours, et
- la nécessité d'isoler rapidement la réfrigération du générateur en avarie pour ne pas alimenter la fuite et limiter la perte d'inventaire primaire.

Tout ceci se fait bien entendu en conservant un mode d'action entièrement passif comme l'ensemble des systèmes de sauvegarde du projet en cours, c'est-à-dire conformément à la catégorie D selon la classification de référence établie par l'AIEA.

Pour cela, la demanderesse a procédé à des simulations et différents phénomènes ont été constatés.

En effet, si les moyens de réfrigération de secours du générateur de vapeur en avarie sont arrêtés trop tôt, il y a alors une augmentation de la pression et du niveau d'eau dans ce générateur de vapeur entrainant l'ouverture des soupapes de surpression de ce générateur de vapeur et la contamination d'une partie de l'enceinte de confinement.

Si les moyens de réfrigération de secours du générateur de vapeur en avarie sont arrêtés trop tard, alors il y a une perte trop importante d'inventaire primaire engendrant une dépressurisation automatique et un noyage de l'enceinte de confinement.

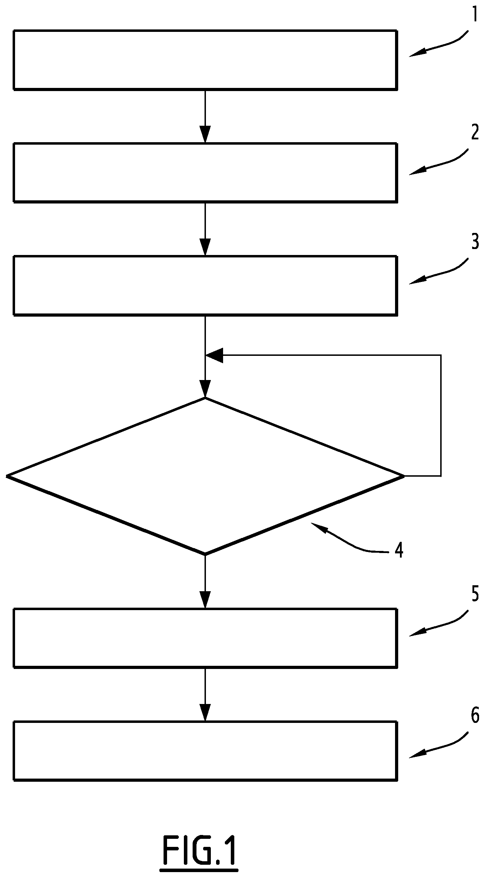

L'invention propose alors de mettre en oeuvre le procédé tel qu'illustré sur la figure 1 qui conduit à assurer la sécurité de l'ensemble lors de l'arrêt.

Il faut bien entendu dans ce cas, se référer aux différents documents déposés par la demanderesse sur le projet de FLEXBLUE pour avoir une description complète du réacteur.

Le procédé décrit conduit à arrêter les moyens de réfrigération de secours du générateur en avarie en se fondant sur une indication témoignant de l'inventaire énergétique du circuit primaire pour être sûr que la puissance à évacuer au primaire qui ne peut que diminuer, n'entraine pas d'ouverture de soupape.

Pour cela, le procédé illustré sur la figure 1, est mis en oeuvre.

Ce procédé peut se résumer de la façon suivante :
Si une fuite primaire/secondaire a été détectée, la réfrigération de secours du générateur de vapeur en avarie est isolée dès que les conditions thermohydrauliques de la chaudière prouvent qu'il n'y a plus de risque d'ouverture de soupape de ce générateur de vapeur si l'on interrompt sa réfrigération.

Dans le cas de ce qui est décrit dans la présente demande, on décide d'isoler le condenseur de secours du générateur de vapeur en avarie si la pression primaire tombe à une valeur inférieure à celle de tarage des soupapes de protection du générateur de vapeur.

En fait, le procédé illustré sur la figure 1, comporte alors une étape 1 de détection d'une fuite primaire/secondaire qui déclenche en 2, un arrêt automatique du réacteur et un isolement du générateur de vapeur.

En 3, on procède à un lignage des condenseurs de secours et en 4 on relève la pression primaire pour que celle-ci soit comparée à la pression de tarage des soupapes des générateurs de vapeur.

Lorsque celle-ci, c'est-à-dire la pression primaire, devient inférieure à la pression de tarage des soupapes, on déclenche l'isolement du condenseur de secours du générateur de vapeur en avarie en 5, et ensuite on poursuit en 6, le refroidissement passif du réacteur sur les échangeurs restants.

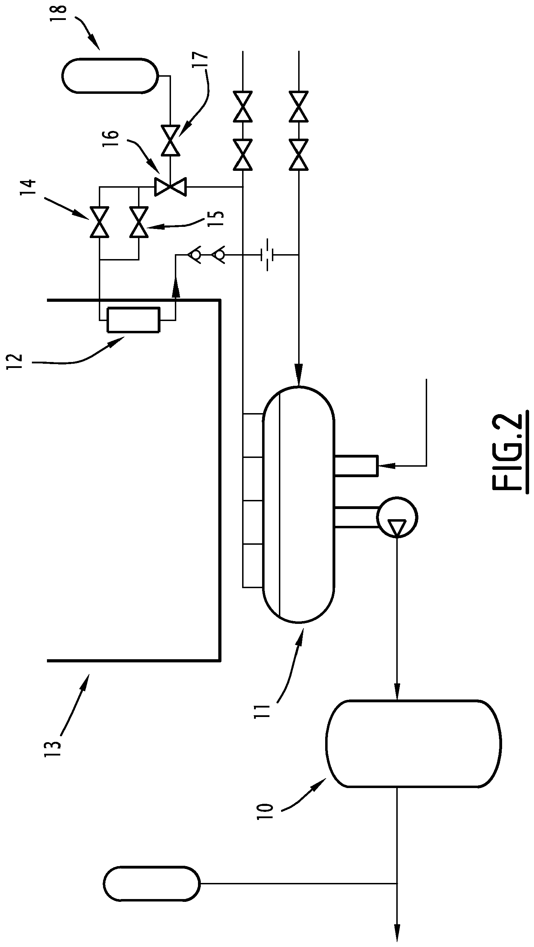

La mise en oeuvre de ce procédé peut être illustrée par les moyens décrits sur la figure 2.

Pour faire une description simplifiée de ce qui a déjà été développé par la demanderesse, on notera simplement que l'on reconnait sur cette figure 2, une cuve de réacteur à eau pressurisée désignée par la référence générale 10, un générateur de vapeur désigné par la référence générale 11 et un condenseur de secours désigné par la référence générale 12 en contact par exemple avec une source inépuisable de froid 13 telle que l'océan ou autre, comme décrit dans les différents documents relatifs au projet FLEXBLUE.

Pour des raisons de sûreté, des vannes 14 et 15 utilisées pour le lignage des condenseurs de secours tels que le condenseur 12, sont doublées et sont du type normalement ouverte de sorte qu'une perte des servitudes du module provoque automatiquement la mise en service des condenseurs de secours.

La séquence proposée dans la présente demande doit aller à l'encontre de ce phénomène.

Ainsi, une vanne d'isolement désignée par la référence générale 16 est prévue dans cette ligne de raccordement au condenseur de secours, pour isoler celui-ci sous l'action d'une vanne de commande désignée par la référence générale 17 raccordée à une source d'air comprimé 18 par exemple.

Ainsi, lors de la perte de l'air de régulation suite à la perte des alimentations électriques consécutives à l'arrêt du réacteur, le condenseur de secours 12 est isolé par la vanne 16 placée en aval, alimentée via la réserve d'air dédiée 18 et disposée par exemple par une vanne 17 de type pyrotechnique ou tout autre dispositif présentant les mêmes qualités c'est-à-dire un taux de défaillance à l'appel extrêmement faible, et une manoeuvre et un maintien en position peu coûteux en terme d'énergie.

Bien entendu différentes solutions techniques au problème de l'isolement automatique de la réfrigération secondaire sont envisageables.

On peut également envisager toute une série de variantes sur deux points techniques précis des éléments présentés à savoir les logiques associées aux trois critères de détection pour déclencher les automatismes et les critères thermo hydrauliques utilisés pour quantifier la perte d'énergie primaire minimale avant d'isoler le condenseur de secours du générateur de vapeur en avarie.

Enfin, on peut envisager d'appliquer les mêmes logiques d'isolement des systèmes de réfrigération de secours sur des réacteurs à sûreté active.

La séquence peut alors être plus simple étant entendu que cela se limite à un isolement définitif de la vanne de décharge à l'atmosphère du générateur en avarie dès que les conditions thermohydrauliques primaires le permettent (à savoir une puissance résiduelle suffisamment faible, une pression primaire inférieure à la pression de tarage des soupapes de protection du générateur de vapeur, etc...).

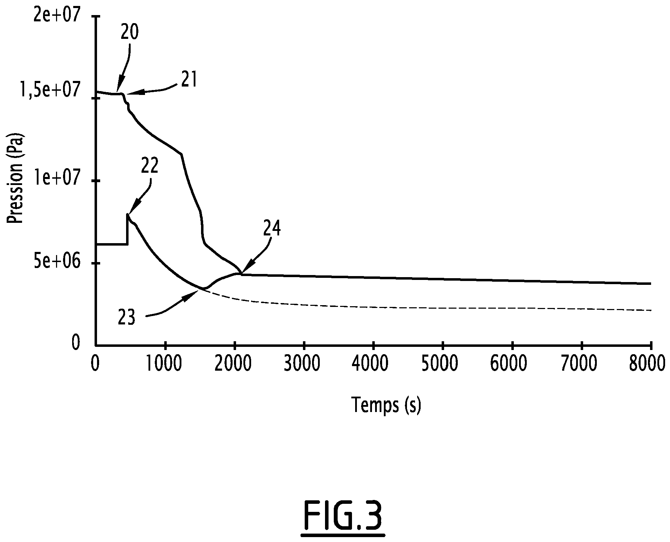

On a illustré par exemple sur la figure 3, une simulation du fonctionnement de l'ensemble de la séquence de mitigation dans le cadre du projet.

Le code de calcul utilisé est le code ATHLET qui est un outil de simulation thermo hydraulique utilisé dans les études d'accident nucléaire et reconnu par des autorités de sûreté internationales.

Les résultats obtenus montrent le fonctionnement couvrant l'ensemble de la gamme des fuites primaire/secondaire communément exigé lors d'une démonstration de sûreté.

Pour une rupture de type guillotine d'un tube de générateur de vapeur on obtient en effet les résultats illustrés sur la figure 3, témoignant d'une gestion rapide de l'avarie n'ayant plus recours qu'à des systèmes passifs après la détection et n'entrainant pas de dommages inacceptables ou irréversibles de l'outil industriel.

Sur cette figure 3, le début de la fuite est désigné par la référence 20, la détection de l'avarie par la référence 21 entrainant l'arrêt automatique du réacteur et de la fourniture de vapeur à la turbine.

En 22 est illustré le démarrage des condenseurs de secours et en 23, l'arrêt du condenseur de secours du générateur de vapeur en avarie.

En 24 on montre l'équilibre primaire/secondaire atteint lorsque la fuite est annulée, le réacteur se refroidissant ensuite lentement pas ses moyens passifs.

Ces courbes sont établies à partir de la pression primaire, de la pression d'un premier générateur de vapeur sain et d'un deuxième générateur de vapeur affecté par la fuite.

Bien entendu, cette modélisation est simplificatrice notamment au niveau des régulations de niveau pressuriseur et générateur de vapeur.

Mais il donne déjà un bon aperçu des résultats obtenus.

Ceci permet encore d'augmenter et d'améliorer les arguments mis en avant à propos de la sûreté intrinsèque et passive des réacteurs nucléaires tels que définis par la demanderesse.

Bien entendu d'autres modes de réalisation encore peuvent être envisagés.

## Revendications

1. Procédé de gestion de l'arrêt d'un réacteur nucléaire à eau pressurisée, intégré dans un module immergé de production d'énergie électrique, en cas de détection d'une fuite primaire/secondaire d'un générateur de vapeur (11) muni d'une soupape de sécurité, raccordé au réacteur et associé à un moyen de réfrigération de secours (12), **caractérisé en ce qu'**il comporte les étapes suivantes :
- 1) détection (en 1) d'une fuite primaire/secondaire du générateur de vapeur (11),
- 2) arrêt automatique (en 2) du réacteur et isolement du générateur de vapeur (11) en avarie,
- 3) lignage (en 3) du moyen de réfrigération de secours (12) correspondant,
- 4) surveillance (en 4) de la pression primaire,
- 5) dès que la pression primaire passe sous la pression de tarage des soupapes de sécurité des générateurs de vapeur (11), isolement (en 5) du moyen de réfrigération de secours (12) du générateur de vapeur (11) en avarie, et
- 6) poursuite (en 6) du refroidissement passif du réacteur sur les générateurs de vapeur (11) restants et sur les moyens de réfrigération de secours (12) restants.

2. Procédé de gestion de l'arrêt d'un réacteur nucléaire à eau pressurisée selon la revendication 1, **caractérisé en ce que** la détection (en 1) d'une fuite primaire/secondaire se fait par détection d'un ou des phénomènes suivants :
- 1) augmentation de l'activité du circuit secondaire due à la contamination par le fluide primaire,
- 2) augmentation de l'inventaire d'eau secondaire,
- 3) diminution de l'inventaire d'eau primaire.

3. Procédé de gestion de l'arrêt d'un réacteur nucléaire à eau pressurisée selon la revendication 1 ou 2, **caractérisé en ce que** l'isolement (en 5) du moyen de réfrigération de secours (12) du générateur de vapeur en avarie est obtenu par déclenchement d'une vanne pilotée (16) interposée entre ceux-ci.

4. Procédé de gestion de l'arrêt d'un réacteur nucléaire à eau pressurisée selon la revendication 3, **caractérisé en ce que** la vanne pilotée (16) est associée à une réserve d'air comprimé (18).

## Patentansprüche

1. Verfahren zur Verwaltung der Unterbrechung eines Druckwasserreaktors, integriert in ein eingetauchtes Modul für die Produktion von elektrischer Energie, bei Feststellung eines primären/sekundären Lecks eines Dampferzeugers (11), ausgestattet mit einem Sicherheitsventil, verbunden mit dem Reaktor und zugeordnet zu einem Sicherheitskühlmittel (12), **dadurch gekennzeichnet, dass** es die folgenden Schritte umfasst:
1) Feststellen (in 1) eines primären/sekundären Lecks des Dampferzeugers (11),
2) automatisches Unterbrechen (in 2) des Reaktors und Isolieren des havarierten Dampferzeugers,
3) Verbinden (in 3) des entsprechenden Sicherheitskühlmittels (12),
4) Überwachen (in 4) des Primärdrucks,
5) sobald der Primärdruck unter den eingestellten Druck der Sicherheitsventile der Dampferzeuger (11) fällt, Isolieren (in 5) des Sicherheitskühlmittels des havarierten Dampferzeugers (11), und
6) Fortsetzen (in 6) der passiven Kühlung des Reaktors über die verbliebenen Dampferzeuger (11) und über die verbliebenen Sicherheitskühlmittel (12).

2. Verfahren zur Verwaltung der Unterbrechung eines Druckwasserreaktors nach Anspruch 1, **dadurch gekennzeichnet, dass** das Feststellen (in 1) eines primären/sekundären Lecks durch Feststellen einer oder der folgenden Erscheinungen erfolgt:
1) Erhöhung der Aktivität des Sekundärkreises aufgrund der Kontaminierung durch das primäre Fluid,
2) Erhöhung des Bestands an Sekundärwasser,
3) Verringerung des Bestands an Primärwasser.

3. Verfahren zur Verwaltung der Unterbrechung eines Druckwasserreaktors nach Anspruch 1 oder 2, **dadurch gekennzeichnet, dass** das Isolieren (in 5) des Sicherheitskühlmittels (12) des havarierten Dampferzeugers durch Einschalten eines gesteuerten Ventils (16) erfolgt, das zwischen diesen angeordnet ist.

4. Verfahren zur Verwaltung der Unterbrechung eines Druckwasserreaktors nach Anspruch 3, **dadurch gekennzeichnet, dass** das gesteuerte Ventil (16) einer Druckluftreserve (18) zugeordnet ist.

## Claims

1. A method for managing stoppage of a pressurized-water nuclear reactor, integrated into a submerged module for producing electrical power, if a primary and/or secondary leak is detected in a steam generator (11) provided with a safety valve, said generator being connected to the reactor and associated with a standby cooling means (12), **characterized in that** it includes the following steps:
- 1) detecting (1) a primary/secondary leak of the steam generator (11),
- 2) automatically stopping (2) the reactor and isolating the damaged steam generators (11),
- 3) bringing (3) the corresponding standby cooling means (12) online,
- 4) monitoring (4) the primary pressure,
- 5) once the primary pressure has passed below the set pressure of the safety valves of the steam generator (11), isolating (5) the standby cooling means (12) of the broken steam generator (11), and
- 6) continuing (6) to passively cool the reactor with the remaining steam generators (11) and cooling means (12).

2. The method for managing stoppage of a pressurized-water nuclear reactor according to claim 1, **characterized in that** the detection (1) of a primary/secondary leak is done by detecting one or several of the following phenomena:
- 1) increased activity of the secondary circuit due to contamination by the primary fluid,
- 2) increased secondary water inventory,
- 3) decreased primary water inventory.

3. The method for stoppage of a pressurized-water nuclear reactor according to claim 1 or 2, **characterized in that** the isolation (5) of the standby cooling means (12) of the broken steam generator is obtained by triggering a controlled valve (16) inserted between them.

4. The method for managing stoppage of a pressurized-water nuclear reactor according to claim 3, **characterized in that** the controlled valve (16) is associated with a compressed air supply (18).
